(19) Europäisches Patentamt
European Patent Office
Office européen des brevets

(11) **EP 2 897 277 A1**

(12) **EUROPEAN PATENT APPLICATION**
published in accordance with Art. 153(4) EPC

(43) Date of publication:
**22.07.2015 Bulletin 2015/30**

(51) Int Cl.:
**H02M 7/483** $^{(2007.01)}$

(21) Application number: **13836333.8**

(86) International application number:
**PCT/JP2013/074221**

(22) Date of filing: **09.09.2013**

(87) International publication number:
**WO 2014/042118 (20.03.2014 Gazette 2014/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.09.2012 JP 2012201460**

(71) Applicant: **National Institute Of Advanced Industrial Science**
**Tokyo 100-8921 (JP)**

(72) Inventors:
• **SATO Yukihiko**
**Tsukuba-shi**
**Ibaraki 305-8568 (JP)**

• **OBARA Hidemine**
**Tsukuba-shi**
**Ibaraki 305-8568 (JP)**
• **OHASHI Hiromichi**
**Tsukuba-shi**
**Ibaraki 305-8568 (JP)**
• **NAKAJIMA Akira**
**Tsukuba-shi**
**Ibaraki 305-8568 (JP)**
• **NISHIZAWA Shinichi**
**Tsukuba-shi**
**Ibaraki 305-8568 (JP)**

(74) Representative: **Graf von Stosch, Andreas et al**
**Graf von Stosch**
**Patentanwaltsgesellschaft mbH**
**Prinzregentenstrasse 22**
**80538 München (DE)**

(54) **MULTILEVEL POWER CONVERSION CIRCUIT AND DEVICE**

(57) [Solution] An actually used flying capacitor-type multilevel power conversion circuit has variations in the characteristics of main semiconductor switches, and includes parasitic elements such as parasitic resistance, parasitic capacity, and parasitic inductance in the circuit, which causes flying capacitors to be charged and discharged to different quantities contrary to ideal case, making it necessary to have voltage sensors for flying capacitor voltage detection and a main semiconductor switch control mechanism in order to suppress fluctuation of the flying capacitor voltages from prescribed values. Furthermore, this circuit becomes unpractical when the number of levels is increased. The present invention provides a circuit that adjusts flying capacitor voltages to prescribed values automatically without voltage sensors for detection of individual flying capacitor voltages, and a main semiconductor switch control mechanism, by additionally providing a main circuit thereof with a closed circuit for suppressing flying capacitor voltage fluctuations by means of an adjusting current.

FIG. 5

**Description**

Technical Field

The present invention relates to a multilevel power conversion circuit, and particularly to a circuit technique and device for adjusting voltage of a flying capacitor in a flying capacitor circuit-type multilevel power conversion circuit.

Background Art

Generally, power conversion circuits in power conversion devices are two-level power conversion circuits capable of outputting a binary (two-valued) voltage.

Two-level power conversion circuits have the following three problems. A first problem is that an output voltage includes a lot of harmonics, which gives rise to a need for a large harmonic filter for outputting a favorable alternating or direct current including a low amount of harmonic components. A second problem is that a lot of electromagnetic noise is generated upon switching. A third problem is that a switching loss is high, which limits the degree to which the efficiency can be improved.

To solve the above-described problems of the two-level power conversion circuits, research and development is being made into multilevel power conversion circuits capable of outputting a ternary (three-valued) or higher voltage, and practical use of such circuits has been started in some sectors. With multilevel power conversion circuits, a voltage waveform to be output can be a truer alternating current or a truer direct current, as the number of levels is greater. Therefore, they can use a harmonic filter smaller than that in two-level power conversion circuits. Furthermore, they can suppress electromagnetic noise and switching loss, because a voltage to be applied per switching element of a main circuit is low.

Meanwhile, multilevel power conversion circuits have a problem in terms of capacitor voltage control. Multilevel power conversion circuits need to be controlled such that voltages of capacitors for synthesizing an output voltage are maintained to specific values. If the voltages of the capacitors depart from the specific values, various problems occur such as distortion of the output waveform, growth of electromagnetic noise, destruction of a main semiconductor switch of a main circuit, and destruction of the capacitors themselves.

The problem of element or capacitor destruction is particularly critical in one-chip integrated circuits. One-chip integrated circuits are circuits obtained by integrating a plurality of semiconductor elements and passive components over an insulating substrate or a semiconductor substrate through a semiconductor process. Because it is impossible to replace the elements on the one-chip integrated circuits individually, it is necessary to replace the entire integrated circuit when one element is destroyed.

Some circuit types have been proposed for multilevel power conversion circuits, including a flying capacitor circuit type, a diode clamping circuit type, and a cascaded H-bridge circuit type, for example.

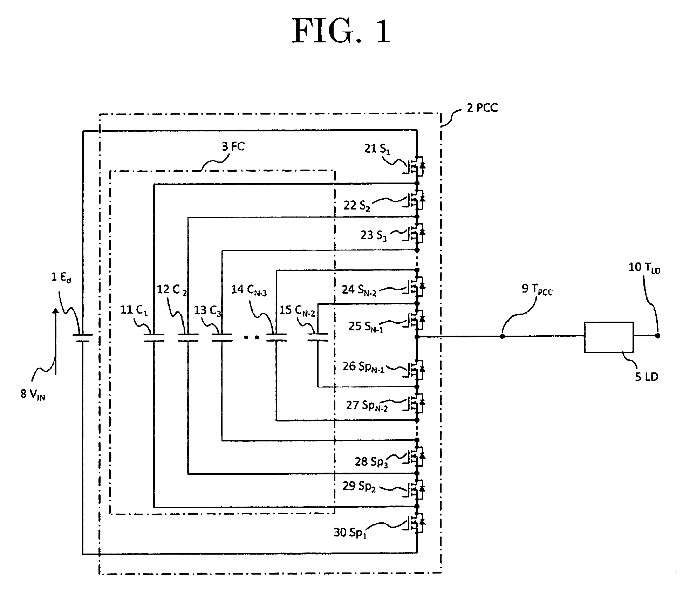

The problems of the multilevel power conversion circuits described above will be described below specifically, by taking a flying capacitor circuit type for example. A flying capacitor circuit type is a multilevel power conversion circuit configured to add or subtract voltages of a plurality of flying capacitors by controlling main semiconductor switches, to thereby enable a ternary (three-valued) or higher voltage to be output. Fig. 1 shows a configuration diagram of a flying capacitor circuit-type multilevel power conversion circuit according to a conventional art. Fig. 1 depicts an N-level multilevel power conversion circuit of a ternary (three-valued) or higher arbitrary output level, and for this sake, skips illustration of the circuits between the flying capacitor 13 and the flying capacitor 14. Further, for the sake of simplicity, Fig. 1 depicts a circuit configuration for only one phase. The number of the circuit shown in Fig. 1 is greater in a circuit configuration for a plurality of phases. For example, the number of the circuit shown in Fig. 1 is three in the case of a three-phase alternating current.

As shown in Fig. 1, the circuit is composed of an input power supply 1, a main circuit 2, and a load 5. The main circuit 2 includes a flying capacitor circuit 3. An output terminal 10 of the load may be connected to different destinations depending on the purposes for which the circuit is used. For example, it may be connected to a high voltage side of the input power supply $E_d$, a low voltage side of the input power supply $E_d$, a middle point of the input power supply $E_d$, or an output terminal of a load of a different phase.

Here, it is required that a voltage $V_n$ of a flying capacitor $C_n$ having an n-th highest voltage be maintained to a prescribed value represented by the formula (1) below.

$$V_n = V_{IN} \times (N-n-1)/(N-1) \qquad (1)$$

N is an integer of 3 or greater representing the number of levels, n is an integer of from 1 to N-2, and $V_{IN}$ is an input voltage.

In an ideal flying capacitor circuit-type multilevel power conversion circuit in which all main semiconductor switches in the main circuit 2 have completely the same characteristics, and there are no parasitic inductances or parasitic capacitances in the circuit, each flying capacitor can be charged and discharged uniformly according to a common control signal generation method of comparing a plurality of carrier waves having different phases corresponding to the number of levels with a modulating wave. Hence, the voltage of each flying capacitor becomes constant at the prescribed value represented by the formula (1).

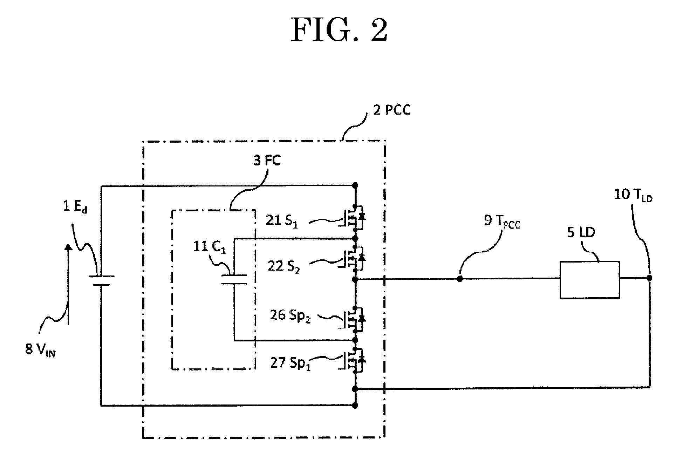

The principle behind this will be described below, using a three-level flying capacitor circuit-type multilevel power conversion circuit shown in Fig. 2.

A three-level multilevel power conversion circuit includes only one flying capacitor, which, in Fig. 2, is represented by a flying capacitor 11.

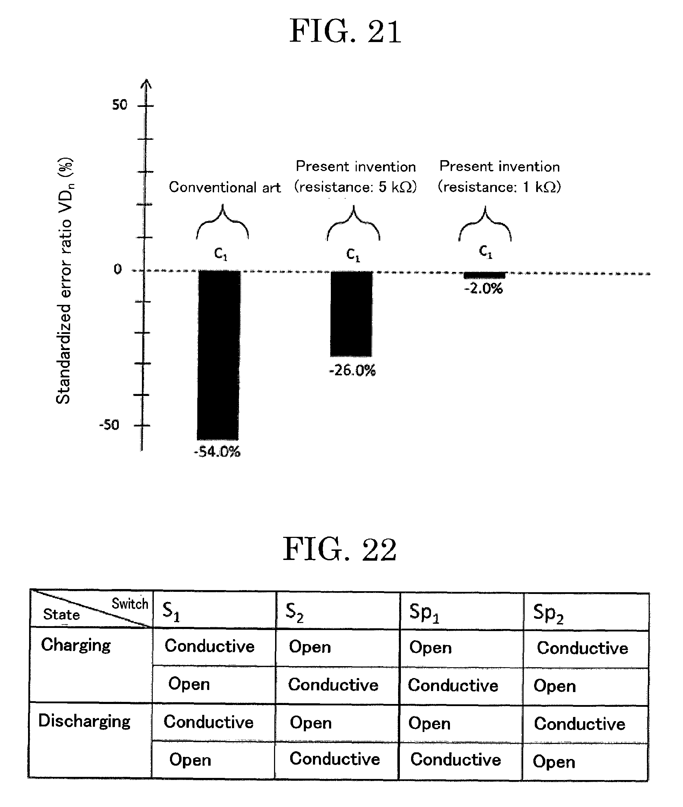

Fig. 22 collectively shows states of the main semiconductor switches in operation modes in which a load current passes through the flying capacitor. Charging and discharging each have two combinations of main semiconductor switch states corresponding to the directions of the current to pass through the flying capacitor. "Conductive" in Fig. 22 means a state in which a voltage corresponding to an on state is applied to a gate of a main semiconductor switch, or a reverse conductive state in which a reverse voltage is applied to a main semiconductor switch. "Open" in Fig. 22 means a state in which a forward voltage is applied to a main semiconductor switch and a voltage corresponding to an off state is applied to a gate thereof.

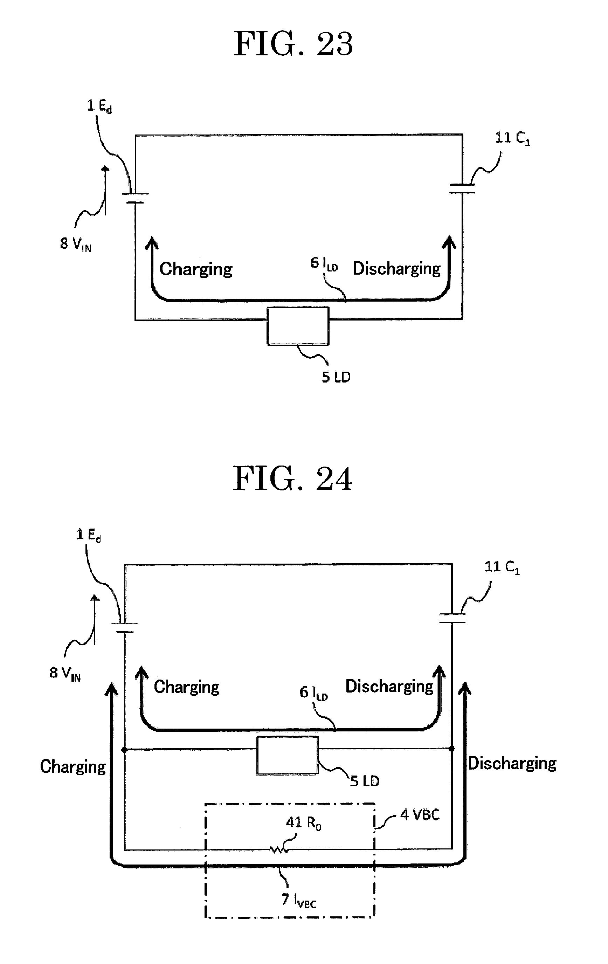

Fig. 23 shows an equivalent circuit in the operation modes of Fig. 22. Charging and discharging of the flying capacitor 11 can be represented by a path 6 of a load current through a load 5. The operation modes are switched based on a switching frequency. By the charging and discharging operation modes being controlled to appear for the same length of time in one switching cycle, the flying capacitor is charged and discharged to the same quantity of charges in each switching cycle, which, in principle, makes the voltage of the flying capacitor constant at the prescribed value.

A case of three levels was described above simply as an example. When the number of levels is four or greater, there are operation modes in which charging and discharging are performed through a plurality of flying capacitors. However, as in the case of three levels, the voltages of the flying capacitors become constant at the prescribed values in principle.

However, power conversion circuits actually used have variations in the characteristics of the main semiconductor switches, and include parasitic elements in the circuit such as a parasitic resistance, a parasitic capacity, and a parasitic inductance. This causes variations in the switching time of the main semiconductor switches of the main circuit, and in the delay of a control signal, and this in turns causes a flying capacitor to be charged and discharged to different quantities contrary to the case of the ideal conditions, to make the voltage of the flying capacitor fluctuate from the prescribed value described above.

A method for overcoming this problem and maintaining the voltages of the flying capacitors at the prescribed values is disclosed in, for example, NPL 1. The method of NPL 1 detects the voltages of the flying capacitors, and charges or discharges the flying capacitors by controlling the main semiconductor switches based on the detected voltages, to thereby adjust the voltages of the flying capacitors to the prescribed values. However, with this method, numerous voltage sensors must be prepared in conjunction with increase in the number of levels, which is infeasible in terms of the volume and cost of the conversion device. Further, as the number of levels is increased, the number of operation modes of the circuit increases exponentially, and it is practically impossible for one operation mode to be selected from among these operation modes based on the voltages of the respective flying capacitors.

Citation List

Non-Patent Literature

NPL 1: Mostafa Khazraei, Hossein Sepahvand, Keith A. Corzine, and MehdiFerdowsi: "Active Capacitor Voltage Balancing in Single-Phase Flying-Capacitor Multilevel Power Converters", IEEE TRANSACTIONS ON INDUSTRIAL ELECTRONICS, VOL. 59, NO. 2, FEBRUARY 2012

Summary of Invention

Technical Problem

An object of the present invention is to provide a flying capacitor circuit-type multilevel power conversion circuit that adjusts voltages of flying capacitors to prescribed values automatically without detecting voltages of the flying capacitors.

Solution to Problem

The present invention provides a flying capacitor circuit-type multilevel power conversion circuit that adjust voltages of flying capacitors to prescribed values automatically without detecting voltages of the flying capacitors. Specifically, the problems described above will be overcome by providing a multilevel power conversion circuit and device described below.

(1) A flying capacitor circuit-type multilevel power conversion circuit, including at least: one or more flying capacitors; four or more main semiconductor switches; and an input terminal and an output terminal of a main circuit, wherein the one or more flying capacitors are connected sequentially between:

a node between adjoining ones of the main semiconductor switches included in a first serial switch line formed by two or more of the main semiconductor switches being connected in series with one side of the input terminal; and

a node between adjoining ones of the main semiconductor switches included in a second serial switch line formed by the same number of the main semiconductor switches being connected in series with the other side of the input terminal,
wherein the output terminal of the main circuit is a node to which open terminals of the first serial switch element line and second serial switch element line are connected,
wherein the main circuit is further provided with a closed circuit composed of a resistor, and
wherein in all charging and discharging operation modes in which an output current flows through the one or more flying capacitors, the multilevel power conversion circuit has a function of adjusting voltages of the one or more flying capacitors to prescribed values automatically without detecting voltage values of the one or more flying capacitors, by letting a charging current and a discharging current of the one or more flying capacitors flow through the resistor of the closed circuit.

(2) The multilevel power conversion circuit,
wherein all of the main semiconductor switches included in the first serial switch line, or all of the main semiconductor switches included in the second serial switch line, or both thereof are produced on one substrate made of a semiconductor or an insulating material.
(3) The multilevel power conversion circuit,
wherein the resistor is connected between the output terminal of the main circuit and an output terminal of a load connected to the output terminal of the main circuit.
(4) The multilevel power conversion circuit,
wherein the resistor is connected to the output terminal of the main circuit, and to either side of the input terminal.
(5) The multilevel power conversion circuit,
wherein the resistor is connected to the output terminal of the main circuit, and to any middle point between of a plurality of input power supplies connected in series with the input terminal of the main circuit.
(6) The multilevel power conversion circuit,
wherein the resistor is composed of two or more resistors connected in series, and nodes between adjoining ones of the resistors are connected to the nodes between adjoining ones of the main semiconductor switches.
(7) The multilevel power conversion circuit,
wherein the resistor is connected in parallel with all of the main semiconductor switches of the first serial switch line or the second serial switch line.
(8) The multilevel power conversion circuit,
wherein the resistor is connected in parallel with all of the main semiconductor switches of the first serial switch line and the second serial switch line.
(9) The multilevel power conversion circuit according to (6) to (8),
wherein all of the resistors have a same resistance value.
(10) The multilevel power conversion circuit according to (1) to (9), further including in the closed circuit:

a semiconductor switch connected in series with the resistor.

(11) The multilevel power conversion circuit according to (1) to (9), further including in the closed circuit:

a capacitor connected in series with the resistor.

(12) The multilevel power conversion circuit according to (1) to (11), further including in the closed circuit:

a capacitor connected in parallel with the resistor.

(13) The multilevel power conversion circuit according to (1) to (12),
wherein the resistor is a semiconductor transistor, and a gate terminal and a drain terminal of the semiconductor transistor are short-circuited.
(14) The multilevel power conversion circuit according to (1) to (13),
wherein the resistor is a semiconductor bidirectional switch.
(15) An AC-DC power conversion circuit,
wherein the AC-DC power conversion circuit is constructed by replacing the load and the input power supply of the multilevel power conversion circuit according to (1) to (14) with an alternating-current input power supply and a load, respectively.
(16) A multilevel power conversion device, including:

the multilevel power conversion circuit according to (1) to (14).

(17) An AC-DC power conversion device, including:

the AC-DC power conversion circuit according to (15).

Advantageous Effects of Invention

The present invention can provide a flying capacitor circuit-type multilevel power conversion circuit with a function of adjusting voltages of flying capacitors to prescribed values without detecting voltage values of the flying capacitors. This makes it possible to adjust the voltages of the flying capacitors to the prescribed values at a higher speed than by a conventional art that needs to detect the voltage values of the flying capacitors. Furthermore, a multilevel power conversion device using this circuit can be reduced in loss, noise, production cost, and device size, and can be improved in reliability.

According to (2) described above, a multilevel power conversion circuit of which main semiconductor switches are one-chip-integrated can be prevented from element destruction, and a multilevel power conversion device using this circuit can be improved in reliability significantly.

According to (3) described above, the function of adjusting the voltages of the flying capacitors to the prescribed values can be obtained irrespective of the destinations to which the output terminal of the load is connected. Therefore, versatility of a multilevel power conversion device using this circuit can be enhanced, and the production cost of the device can be reduced yet more.

According to (4) described above, the resistor can be disposed immediately closely to the main semiconductor switches irrespective of the shape and dimension of the load. This makes it possible to suppress a parasitic inductance in the closed circuit, which leads to an effect that the voltages of the flying capacitors are adjusted to the prescribed values at a higher speed.

According to (5) described above, the effects of (3) and (4) described above can be obtained at the same time, which leads to a high versatility, a low cost, and an effect that the voltages of the flying capacitors are adjusted to the prescribed values at a high speed.

According to (6) described above, trade-off between the electricity consumed by the resistor in the closed circuit and the capability of adjusting the voltages of the flying capacitors to the prescribed values is mitigated, which makes it possible to suppress the electricity to be consumed by the resistor.

According to (7) described above, in addition to the effect of (6) described above, it is possible to design the levels of adjusting currents for adjusting the gaps from the prescribed values for each of the flying capacitors independently. Therefore, the trade-off of the capability of adjusting the voltages of the flying capacitors to the prescribed values is mitigated yet more, and the electricity to be consumed by the resistor can be suppressed.

According to (8) described above, in addition to the effect of (7) described above, it is possible to design the levels of adjusting currents for charging and discharging the flying capacitors independently. Therefore, the trade-off of the capability of adjusting the voltages of the flying capacitors to the prescribed values is mitigated yet more, and the electricity to be consumed by the resistor can be suppressed.

According to (9) described above, versatility of the circuit is enhanced, and a highly versatile multilevel power conversion circuit that can be used for various purposes can be realized. Therefore, versatility of a multilevel power conversion device using this circuit is enhanced, and the production cost of the device can be suppressed.

According to (10) described above, it is possible to open the closed circuit and interrupt a current to thereby suppress unnecessary loss in the resistor, in the case where the voltages of the flying capacitors are stable, or in an operation mode in which there is a risk that a current may flow through the resistor aside from the purpose of adjusting the voltages.

According to (11) described above, in addition to a similar effect to that of (10) described above, it is possible to interrupt a current in the closed circuit automatically without a control, which makes it possible to interrupt a current to flow through the closed circuit automatically at a high speed.

According to (12) described above, trade-off between the electricity consumed by the resistor in the closed circuit and the capability of adjusting the voltages of the flying capacitors to the prescribed values is mitigated, which makes it possible to suppress the electricity to be consumed by the resistor.

According to (13) described above, trade-off between the electricity consumed by the resistor in the closed circuit and the capability of adjusting the voltages of the flying capacitors to the prescribed values is mitigated, which makes it possible to suppress the electricity to be consumed by the resistor.

According to (14) described above, trade-off between the electricity consumed by the resistor in the closed circuit and the capability of adjusting the voltages of the flying capacitors to the prescribed values is mitigated, which makes it possible to suppress the electricity to be consumed by the resistor.

According to (15) described above, the present invention can be applied to an AC-DC power conversion circuit.

According to (16) described above, the present invention can be applied to a multilevel power conversion device.

According to (17) described above, the present invention can be applied to an AC-DC power conversion device.

Brief Description of Drawings

Fig. 1 is a configuration diagram of a flying capacitor power conversion circuit of a conventional art.

Fig. 2 is an example of a configuration diagram of a three-level flying capacitor circuit-type multilevel power conversion circuit of a conventional art.

Fig. 3 is a conceptual diagram of a flying capacitor circuit-type multilevel power conversion circuit of the present invention.

Fig. 4 is an example of a configuration diagram of a three-level flying capacitor circuit-type multilevel power conversion circuit of the present invention.

Fig. 5 is a basic configuration diagram of a flying capacitor circuit-type multilevel power conversion circuit of the present invention.

Fig. 6 is a modified example of a configuration diagram of a fling capacitor circuit-type multilevel power conversion circuit of the present invention.

Fig. 7 is a modified example of a configuration diagram of a flying capacitor circuit-type multilevel power conversion circuit of the present invention.

Fig. 8 is a modified example of a configuration diagram of a flying capacitor circuit-type multilevel power conversion circuit of the present invention.

Fig. 9 is a modified example of a configuration diagram of a flying capacitor circuit-type multilevel power conversion circuit of the present invention.

Fig. 10 is a modified example of a configuration diagram of a flying capacitor circuit-type multilevel power conversion circuit of the present invention.

Fig. 11 is a modified example of a configuration diagram of a flying capacitor circuit-type multilevel power conversion circuit of the present invention.

Fig. 12 is a modified example of a configuration diagram of a flying capacitor circuit-type multilevel power conversion circuit of the present invention.

Fig. 13 is a modified example of a configuration diagram of a flying capacitor circuit-type multilevel power conversion circuit of the present invention.

Fig. 14 is a modified example of a configuration diagram of a flying capacitor circuit-type multilevel power conversion circuit of the present invention.

Fig. 15 is a modified example of a configuration diagram of a flying capacitor circuit-type multilevel power conversion circuit of the present invention.

Fig. 16 is a modified example of a configuration diagram of a flying capacitor circuit-type multilevel power conversion circuit of the present invention.

Fig. 17 is a modified example of a configuration diagram of a flying capacitor circuit-type multilevel power conversion circuit of the present invention.

Fig. 18 is a modified example of a configuration diagram of a flying capacitor circuit-type multilevel power conversion circuit of the present invention.

Fig. 19 is a simulation result of a five-level flying capacitor circuit-type multilevel power conversion device of Example 1.

Fig. 20 is a simulation result of a five-level flying capacitor circuit-type multilevel power conversion device of Example 2.

Fig. 21 is an experimental result of a three-level flying capacitor circuit-type multilevel power conversion device of Example 3.

Fig. 22 is a table showing states of main semiconductor switches in charging/discharging operation modes of a three-level flying capacitor circuit-type multilevel power conversion circuit of a conventional art.

Fig. 23 is a circuit diagram representing an equivalent circuit of a three-level flying capacitor circuit-type multilevel power conversion circuit of a conventional art in its charging/discharging operation modes.

Fig. 24 is a circuit diagram representing an equivalent circuit of a three-level flying capacitor circuit-type multilevel power conversion circuit of the present invention in its charging/discharging operation mode.

Description of Embodiments

In the following, a mode for carrying out the present invention (hereinafter, embodiment) will be described first. Next, results of virtual experiments using simulation will be presented in Example 1 and Example 2. Further, results of measurement using an actual device will be presented in example 3.

In the present embodiment, a flying capacitor circuit-type multilevel power conversion circuit of the present invention, as a DC-DC power conversion circuit used in a DC-DC power conversion device (of which input and output are direct currents), and a DC-AC power conversion circuit used in a DC-AC power conversion device (of which input is a direct current, and of which output is an alternating current) will be described.

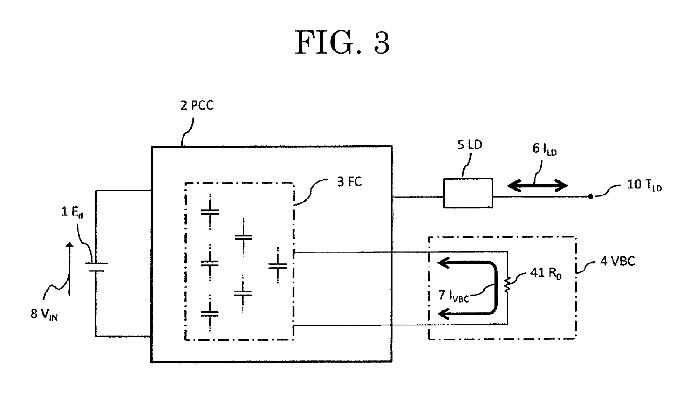

Fig. 3 shows a conceptual diagram of a flying capacitor circuit-type multilevel power conversion circuit of the present invention. An adjusting resistor 41 is disposed such that a closed circuit in which an adjusting current for charging and discharging a flying capacitor flows through not a load 5 but the adjusting resistor 41 is formed in all operation modes in which an output current flows through the flying capacitor. This makes the adjusting current flow along a path 7 of the adjusting current, making it possible to adjust the voltage of the flying capacitor to a prescribed value automatically without detecting the voltage value of the flying capacitor.

The configuration of the multilevel power conversion circuit of the present invention will be described more specifically, in comparison with a three-level multilevel power conversion circuit of a conventional art shown in Fig. 2.

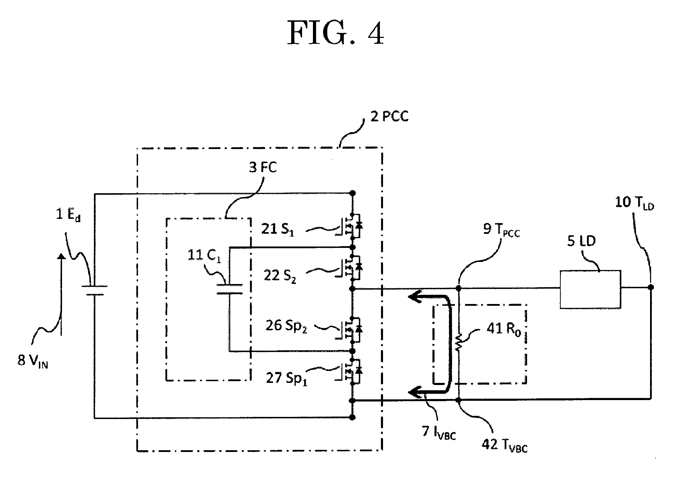

Fig. 4 shows one example of a three-level flying capacitor circuit-type multilevel power conversion circuit of the present invention. As an example, Fig. 4 shows that an output terminal 42 of a voltage adjusting circuit and an output terminal 10 of a load are both connected to a lower voltage side of an input power supply 1. States of main semiconductor switches 21, 22, 26, and 27 of a flying capacitor 11 in the three-level multilevel power conversion circuit of the present invention shown in Fig. 4 in charging and discharging operation modes are the same as those of a conventional art shown in Fig. 22.

Fig. 24 shows an equivalent circuit of this case. A closed circuit configured to flow an adjusting current for charging or discharging a flying capacitor 11 without passing a load 5 is formed by a voltage adjusting circuit 4. Hence, there automatically flows an adjusting current 7 in a direction to bring back the voltage of the flying capacitor to the prescribed value, as a phenomenon characteristic to a flying capacitor circuit type, but not to other circuit-type multilevel power conversion circuits. This makes it possible to obtain a function of adjusting the voltage of the flying capacitor 11 to the prescribed value represented by the formula (1) above automatically, without necessitating detection of the voltage of the flying capacitor 11, and an active control for feeding back the result to the control of the main semiconductor switches 21, 22, 26, and 27.

More specifically, it is possible to obtain a function of adjusting the voltage to the prescribed value represented by $V_1=0.5 \times V_{IN}$, which is a result of assigning N=3 and n=1 to the formula (1) above. Hence, it is possible to realize a high-speed voltage adjustment that keeps up with fluctuations of the flying capacitor voltage. It is possible to adjust the voltage of the flying capacitor to the prescribed value at a higher speed than by a conventional art that requires detection of the voltage value of the flying capacitor. Furthermore, it is possible to suppress loss, noise, production cost, and device size of, and improve reliability of a multilevel power conversion device using this circuit.

Fig. 4 explains the circuit configuration and effect of the present invention by taking a case of three levels as an example for simplicity. The effect of adjusting the voltage of the flying capacitor automatically can be obtained also in the case of four levels or higher, as in the case of three levels.

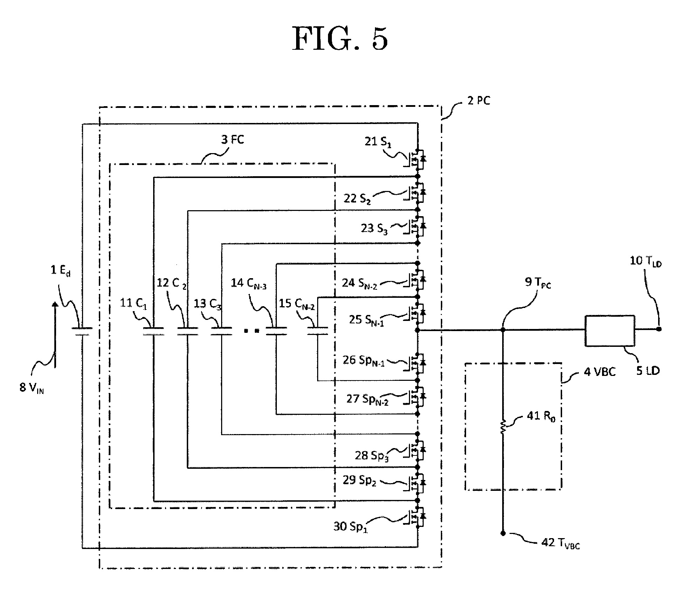

As a more generalized circuit configuration, Fig. 5 shows a basic configuration diagram of an N-level flying capacitor circuit-type multilevel power conversion circuit of the present invention that can output N values as an output voltage.

As the circuit configuration, the N-level multilevel power conversion circuit of the present invention is a flying capacitor circuit-type multilevel power conversion circuit that includes at least: a flying capacitor circuit 3 composed of one or more flying capacitors 11 to 15; a main circuit 2 composed of the flying capacitor 3, four or more main semiconductor switches 21 to 30, and a main circuit output terminal 9; an input power supply 1; and a load 5 connected to the output terminal 9 of the main circuit, as shown in Fig. 5. The flying capacitors 11 to 15 are connected sequentially between: a node between adjoining main semiconductor switches of a first serial switch line formed by two or more main semiconductor switches 21 to 25 being connected in series with one terminal of the input power supply 1; and a node between adjoining main semiconductor switches of a second serial switch line formed by two or more main semiconductor switches 26 to 30 being connected in series with the other terminal of the input power supply. The output terminal 9 of the main circuit is a node to which open terminals of the first serial switch element line and second serial switch element line are connected. The main circuit 2 is further provided with a closed circuit composed of an adjusting resistor 41. The flying capacitor circuit-type multilevel power conversion circuit is characterized by having a function of adjusting the voltages of the flying capacitors 11 to 15 to the prescribed values automatically without detecting the voltage values of the flying capacitors 11 to 15, by letting a charging current and a discharging current of the flying capacitors 11 to 15 flow through the adjusting resistor 41 of the closed circuit but not the load 5, in all charging and discharging operation modes in which an output current flows through the flying capacitors 11 to 15. For the sake of simplicity, Fig. 5 depicts a circuit configuration for only one phase. The number of the circuit having the circuit configuration shown in Fig. 5 is greater for a plurality of phases. For example, the number of the circuit having the circuit configuration shown in Fig. 1 is three in the case of a three-phase alternating current.

Here, the prescribed value $V_n$ of the voltage of a flying capacitor $C_n$ having an n-th highest voltage is a value represented by the formula (2) below.

$$V_n = V_{IN} \times (N-n-1)/(N-1) \qquad (2)$$

N is an integer of 3 or greater representing the number of levels, n is an integer of from 1 to N-2, and $V_{IN}$ is an input voltage.

The voltage adjusting circuit 4 is composed of the adjusting resistor 41. The adjusting resistor 41 may be a metallic, ceramic, or semiconductor resistor. For example, it may be a wire wound resistor or a chip resistor.

The main semiconductor switches 21 to 30 constituting the main circuit 2 may be semiconductor switches having reverse conductivity. For example, as shown in Fig. 5, an N-channel-type normally off-type MOSFET (oxide film gate field effect transistor) and a diode connected in antiparallel may be used as each of the main semiconductor switches 21 to 30. Here, antiparallel connection refers to a circuit configuration in which a drain of a transistor and a cathode of a diode are connected with each other, and a source of the transistor and an anode of the diode are connected with each other. The circuit of Fig. 5 can operate without a diode, but with a diode, can have an improved reverse conductivity and suppress loss of the circuit based on this.

The flying capacitors 11 to 15 constituting the flying capacitor circuit 3 may be various types of capacitors. For example, they may be a ceramic capacitor using a dielectric material, a plastic film capacitor, various types of electrolytic capacitors such as an aluminum electrolytic capacitor, and a capacitor utilizing a semiconductor PN junction capacity.

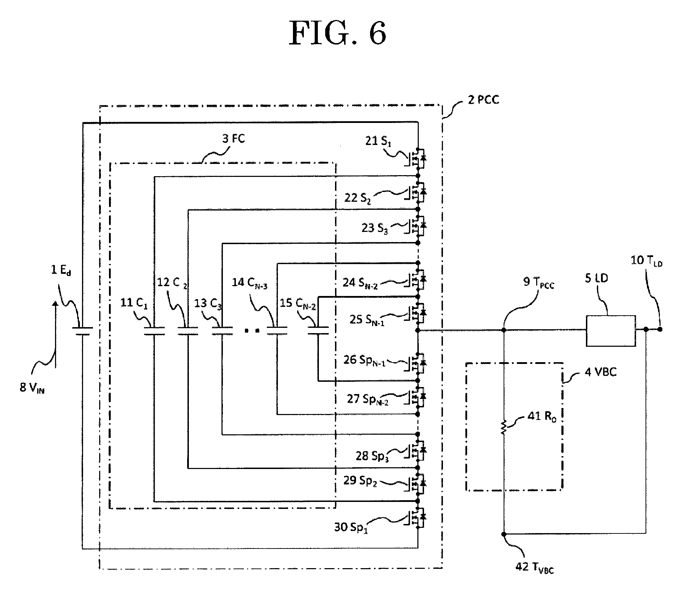

The output terminal 42 of the voltage adjusting circuit can be connected as below. First, as shown in Fig. 6, the output terminal 42 of the voltage adjusting circuit can be connected to the output terminal 10 of the load. In the circuit configuration of Fig. 6, the adjusting resistor 41 is connected in parallel with the load 5. This makes it possible to obtain the function of adjusting the voltages of the flying capacitors to the prescribed values irrespective of the destination to which the output terminal 10 of the load is connected, which leads to a high versatility of a multilevel power conversion device using this circuit, and to further reduction of the production cost of the device.

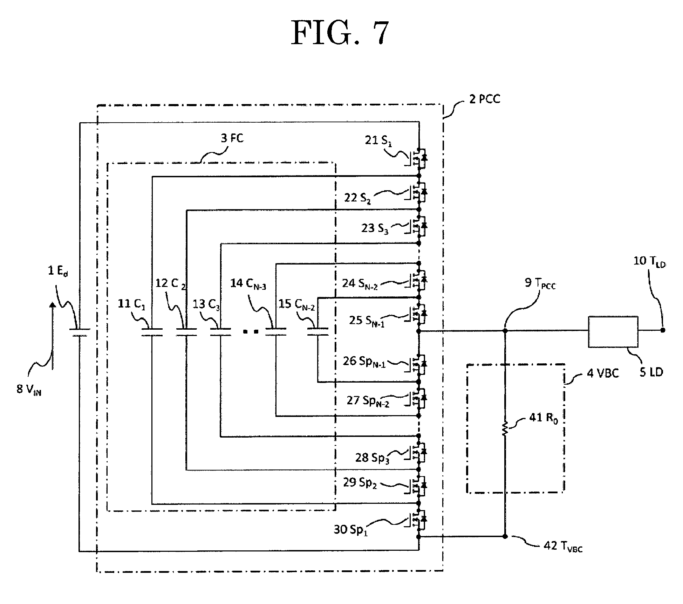

Further, as shown in Fig. 7, the output terminal 42 of the voltage adjusting circuit can be connected to a low voltage side of the input power supply $E_d$.

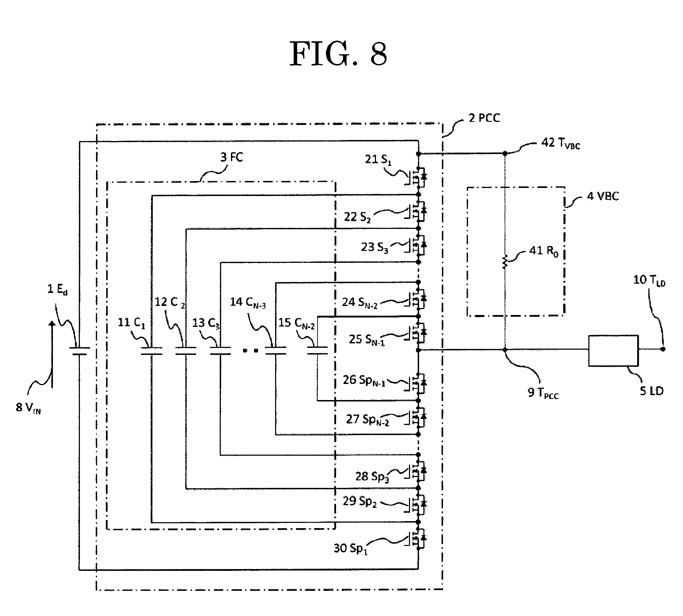

Further, as shown in Fig. 8, the output terminal 42 of the voltage adjusting circuit can be connected to a high voltage side of the input power supply $E_d$. This makes it possible to dispose the adjusting resistor 41 immediately closely to the main semiconductor switches 21 to 30 irrespective of the shape and dimension of the load 5. This in turns makes it possible to suppress a parasitic inductance in the closed circuit, which leads to an effect that the voltages of the flying capacitors are adjusted to the prescribed values at a higher speed.

Fig. 5 shows only one input power supply 1. However, it may be replaced with a plurality of direct-current power supplies connected in series. In such a case, the output terminal 42 of the voltage adjusting circuit can be connected to a middle point of the connected direct-current power supplies.

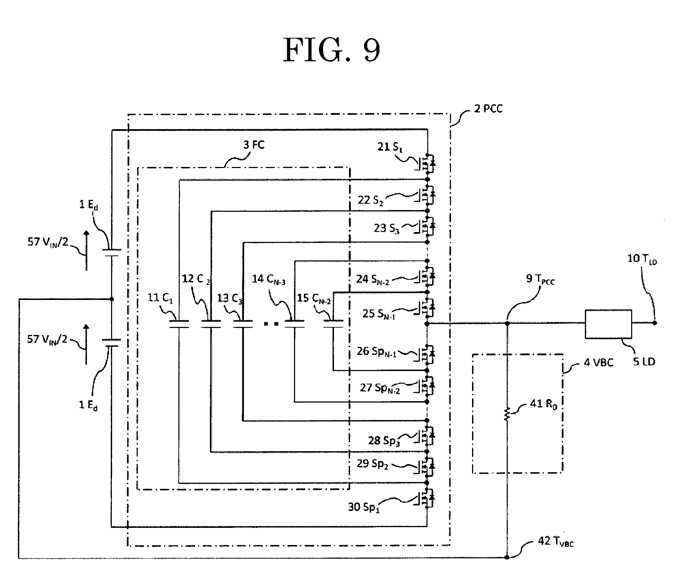

For example, as shown in Fig. 9, the output terminal 42 of the voltage adjusting circuit can be connected to a middle point between two input power supplies 1 configured to output a value 57, which is $V_{IN}/2$, which is half of an input voltage $V_{IN}$. This makes it possible to obtain the function of adjusting the voltages of the flying capacitors to the prescribed values irrespective of the destination to which the output terminal 10 of the load is connected, which leads to a high versatility of a multilevel power conversion device using this circuit, and to further reduction of the production cost of the device. Further, it is possible to dispose the resistor 41 immediately closely to the main semiconductor switches 21 to 30 irrespective of the shape and dimension of the load 5. This in turns makes it possible to suppress a parasitic inductance in the closed circuit, which leads to an effect that the voltages of the flying capacitors are adjusted to the prescribed values at a higher speed.

In the present embodiment, a circuit configuration for only one phase is described for simplicity. However, in a circuit configuration having a plurality of phases, the output terminal may be connected to an output terminal of a load of other phases, etc.

In the multilevel power conversion circuit of the present invention, there is a trade-off relationship between the electricity to be consumed by the voltage adjusting circuit 4 (hereinafter, an adjusting electricity), and the capability of adjusting the voltages of the flying capacitors to the prescribed values (hereinafter, an adjusting capability). Specifically, as the resistance value of the adjusting resistor 41 is lowered, the adjusting capability increases to bring the voltages of the flying capacitors more closely to the prescribed values, but the adjusting electricity increases at the same time.

As a method for mitigating this trade-off relationship, it is possible to replace the adjusting resistor 41 constituting the voltage adjusting circuit 4 with a semiconductor element. In a normal resistor, a current changes linearly with respect to an applied voltage. With a semiconductor element, a current increases super-linearly with respect to changes of a voltage, which enables mitigation of the trade-off relationship. Further, replacement with a semiconductor element enables not only mitigation of the trade-off, but also improvement of the reliability of the device, and reduction of the size and cost of the device.

Specifically, in a DC-DC power conversion circuit, the adjusting resistor 41 may be replaced with a diode, a zener diode, a field effect transistor of which gate terminal and of which drain terminal are short-circuited, or a bipolar transistor of which base terminal and of which collector terminal are short-circuited. This makes it possible to mitigate the trade-off between the adjusting capability and the adjusting electricity.

Further, in a DC-AC power conversion circuit and an AC-DC power conversion circuit, the adjusting resistor 41 may be replaced with diodes or zener diodes of which anodes or of which cathodes are connected in series. Further, it may be replaced with an antiparallel circuit of diodes or of zener diodes, an anode of one of which and a cathode of another of which are connected. It may be replaced with an adjusting bidirectional switch obtained by connecting in series, sources or drains of field effect transistors, a gate terminal of each of which and a drain terminal of each of which are short-circuited. It may be replaced with an adjusting bidirectional switch obtained by connecting in series, emitters or collectors of bipolar transistors, a base terminal of each of which and a collector terminal of each of which are short-circuited.

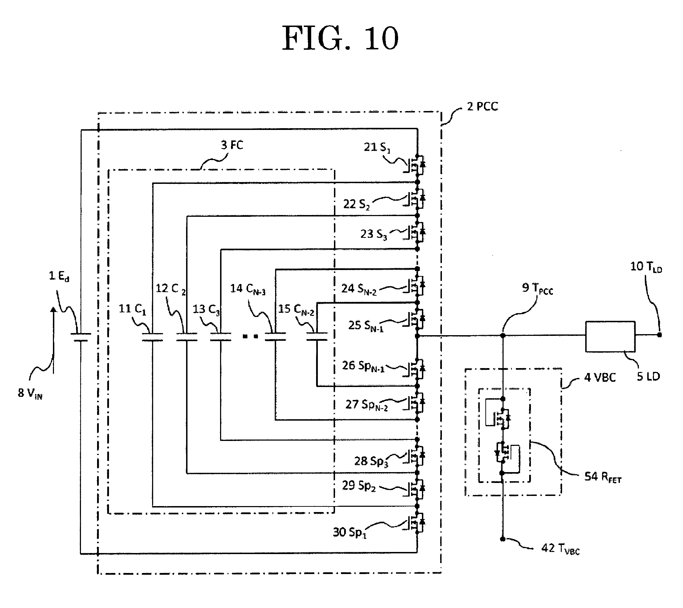

As an example thereof, Fig. 10 shows a configuration diagram of an adjusting bidirectional switch 54 obtained by connecting in series, sources of filed effect transistors, a gate terminal of each of which and a drain terminal of each of which are short-circuited.

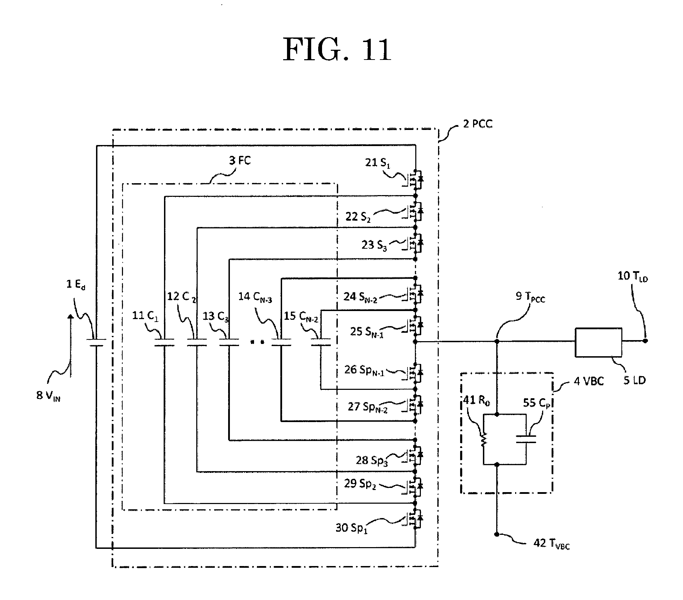

Further, as shown in Fig. 11, an adjusting capacitor 55 may be inserted in parallel with the voltage adjusting resistor 41. This makes it possible to mitigate the trade-off relationship between the adjusting electricity and the adjusting capability.

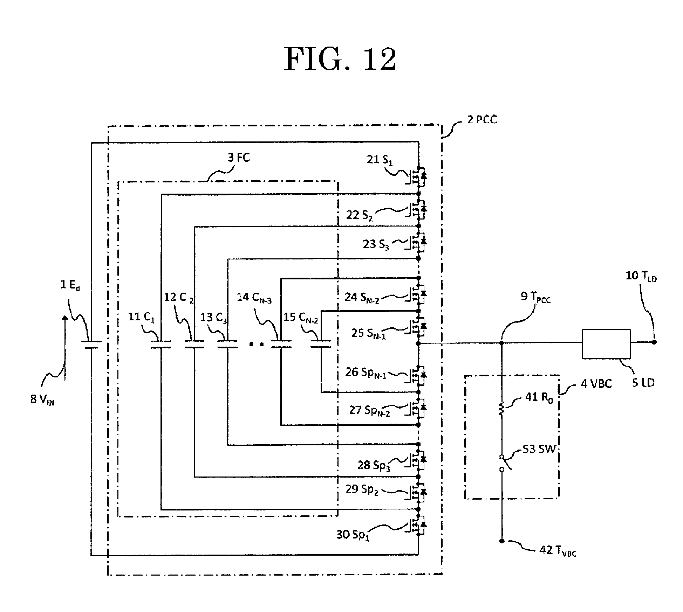

Further, as shown in Fig. 12, an adjusting switch 53 may be inserted in series with the voltage adjusting resistor 41, which makes it possible to suppress unnecessary loss in the voltage adjusting circuit 4 by opening the adjusting switch 53 in a case where the electricity consumed by the load is low, or in an operation mode in which a current irrelevant to the voltage adjustment may flow through the voltage adjusting circuit 4. In this way, the trade-off relationship between the adjusting electricity and the adjusting capability can be mitigated.

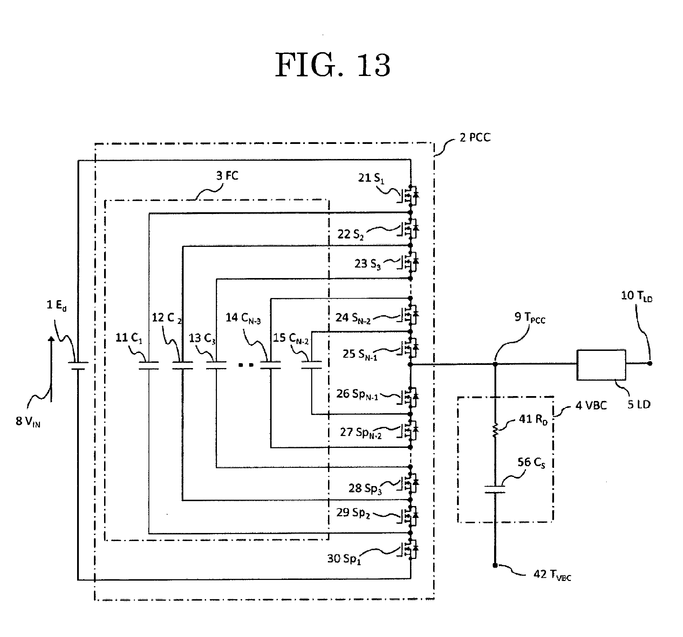

Further, as shown in Fig. 13, an adjusting capacitor 56 may be inserted in series with the adjusting resistor 41, which makes it possible to suppress unnecessary loss in the voltage adjusting circuit 4 in a case where the electricity consumed by the load is low, or in an operation mode in which a current irrelevant to the voltage adjustment may flow through the voltage adjusting circuit 4. In this way, the trade-off relationship between the adjusting electricity and the adjusting capability can be mitigated.

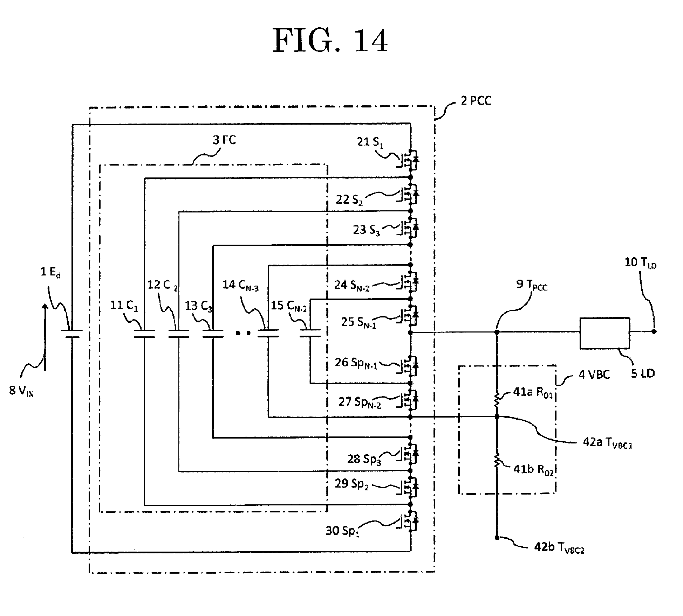

Further, in Fig. 3 to Fig. 13, and Fig. 24, there are only one adjusting resistor 41 and only one output terminal 42 of the voltage adjusting circuit. However, it is also possible to provide a plurality of adjusting resistors and a plurality of output terminals of the voltage adjusting circuit. Specifically, nodes between adjoining adjusting resistors included in series-connected two or more adjusting resistors may function as output terminals of the voltage adjusting circuit, and these output terminals of the voltage adjusting circuit may be connected to nodes between adjoining main semiconductor switches. As an example, Fig. 14 shows a configuration diagram using two adjusting resistors. A node between an adjusting resistor 41a and an adjusting resistor 41b functions as an output terminal 42a of the voltage adjusting circuit, and is connected to an arbitrary node between adjoining main semiconductor switches.

When there is one adjusting resistor as in Fig. 3 to Fig. 13, and Fig. 24, the adjusting capability is determined uniformly to all of the flying capacitors 11 to 15. On the other hand, use of a plurality of adjusting resistors makes it possible to flow adjusting currents having different levels through the flying capacitors, respectively. In this way, the trade-off relationship between the adjusting electricity and the adjusting capability can be mitigated.

Further, an output terminal 42b of the voltage adjusting circuit of Fig. 14 can be connected in the same ways as in Fig. 6 to Fig. 10. Fig. 14 illustrates a circuit configuration for only one phase for simplicity. However, in a circuit configuration having a plurality of phases, the output terminal may be connected to an output terminal of a load of another phase. Further, the adjusting resistors 41a and 41b may be modified for the same purposes as shown in Fig. 11 to Fig. 13. For example, as in the modified example of Fig. 12, adjusting switches for interrupting the adjusting currents may be provided for the adjusting resistors 41a and 41b, respectively.

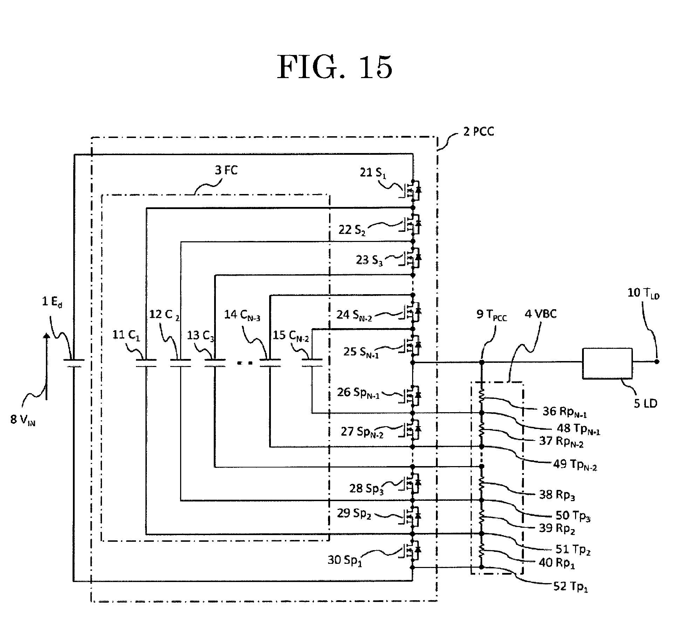

Further, as an evolved model of Fig. 14, all of the main semiconductor switches 26 to 30 included in the serial switch line formed by the main semiconductor switches 26 to 30 on the low voltage side of the input power supply being connected in series may have parallel-connected adjusting resistors 36 to 40, respectively, as shown in Fig. 15. This complicates the circuit, but makes it possible to design the levels of the adjusting currents for adjusting the gaps from the prescribed values for each of the flying capacitors 11 to 15 independently, and to mitigate the trade-off between the adjusting electricity and the adjusting capability owing to the increase in the number of closed circuits through which the adjusting currents flow. Here, the adjusting resistors 36 to 40 in Fig. 15 may be modified to the same effect as shown in Fig. 11 to Fig. 13. For example, as in the modified example of Fig. 12, adjusting switches for interrupting adjusting currents may be provided for the adjusting resistors 36 to 40, respectively.

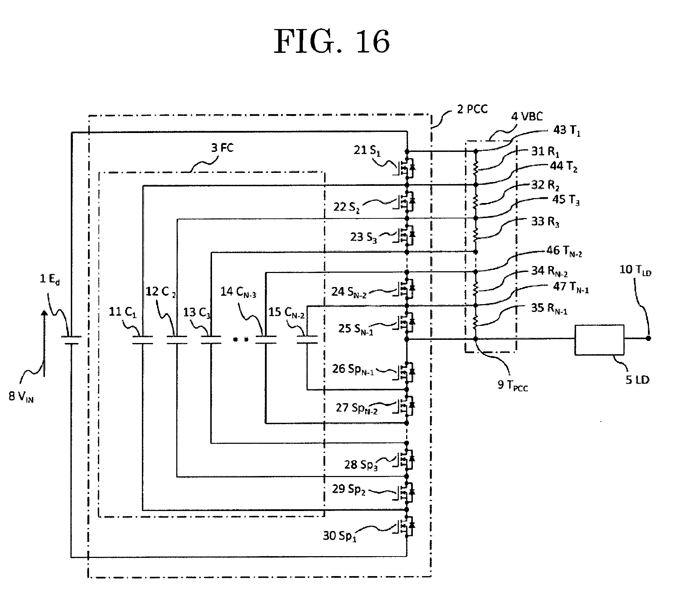

Further, as an evolved model of Fig. 14, all of the main semiconductor switches 21 to 25 included in the serial switch line formed by the main semiconductor switches 21 to 25 on the high voltage side of the input power supply being connected in series may be parallel-connected adjusting resistors 31 to 35, respectively, as shown in Fig. 16. This complicates the circuit, but makes it possible to design the levels of the adjusting currents for adjusting the gaps from the prescribed values for each of the flying capacitors 11 to 15 independently, and to mitigate the trade-off between the adjusting electricity and the adjusting capability owing to the additional increase in the number of closed circuits through which the adjusting currents flow. Here, the adjusting resistors 31 to 35 in Fig. 16 may be modified to the same effect as shown in Fig. 11 to Fig. 13. For example, as in the modified example of Fig. 12, adjusting switches for interrupting adjusting currents may be provided for the adjusting resistors 31 to 35, respectively.

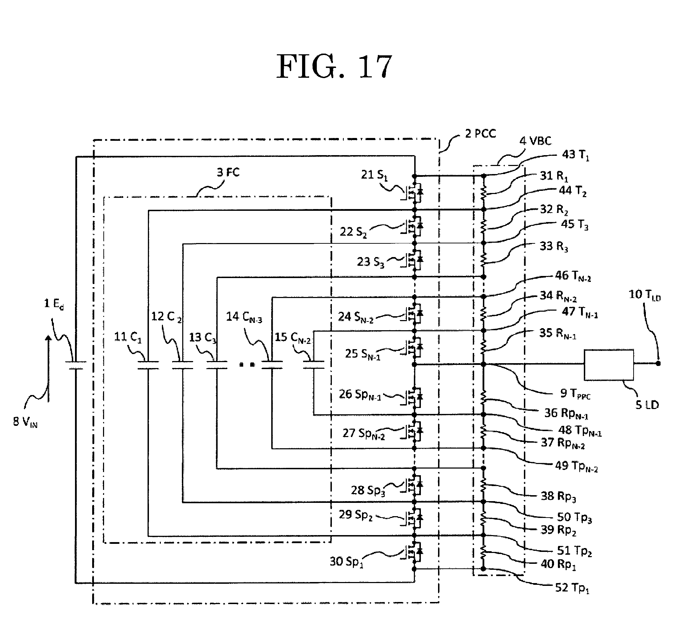

As a further evolved model of Fig. 15 and Fig. 16, all of the main semiconductor switches 21 to 30 of the main circuit 2 may have parallel-connected adjusting resistors 31 to 40, respectively, as shown in Fig. 17. This complicates the circuit, but in addition to the effects of the circuits of Fig. 15 and Fig. 16, makes it possible to design the levels of the adjusting currents for charging and discharging each of the flying capacitors independently, and to further mitigate the trade-off between the adjusting electricity and the adjusting capability owing to the additional increase in the number of closed circuits through which the adjusting currents flow. Here, the adjusting resistors 31 to 40 in Fig. 17 may be modified to the same effect as shown in Fig. 11 to Fig. 13. For example, as in the modified example of Fig. 12, adjusting switches for interrupting adjusting currents may be provided for the adjusting resistors 31 to 40, respectively.

The voltage fluctuation width of the flying capacitors 11 to 15 is different depending on the characteristic of the load 5 connected to the multilevel power conversion circuit. Hence, for the purpose of optimization with respect to each individual load characteristic, the resistance values of the respective adjusting resistors 41a, 41b, and 31 to 40 of Fig. 14 to Fig. 17 may be optimized individually, which makes it possible to exhibit the maximum voltage adjusting effect while suppressing the electricity consumed by the voltage adjusting circuit 4.

Specifically, in an operation mode in which large charging and discharging currents flow through the load, the resistance value of an adjusting resistor through which the adjusting current flows in the instant operation mode may be set lower than the other adjusting resistors, which makes it possible to mitigate the trade-off between the adjusting electricity and the adjusting capability.

However, when a plurality of adjusting resistors are used as in Fig. 14 to Fig. 17, all of the adjusting resistors 41a, 41b, and 31 to 40 may be designed to the same value. This makes it possible to provide a highly versatile multilevel power conversion circuit that can be applied to multilevel power conversion devices for various applications, and to suppress the production cost of the power conversion devices. Even when all of the adjusting resistors are designed to the same value, the trade-off between the adjusting electricity and the adjusting capability can be mitigated because the number of closed circuits through which adjusting currents flow is larger than in the circuit configurations of Fig. 3 to Fig. 13, and Fig. 24 in which there is only one adjusting resistor.

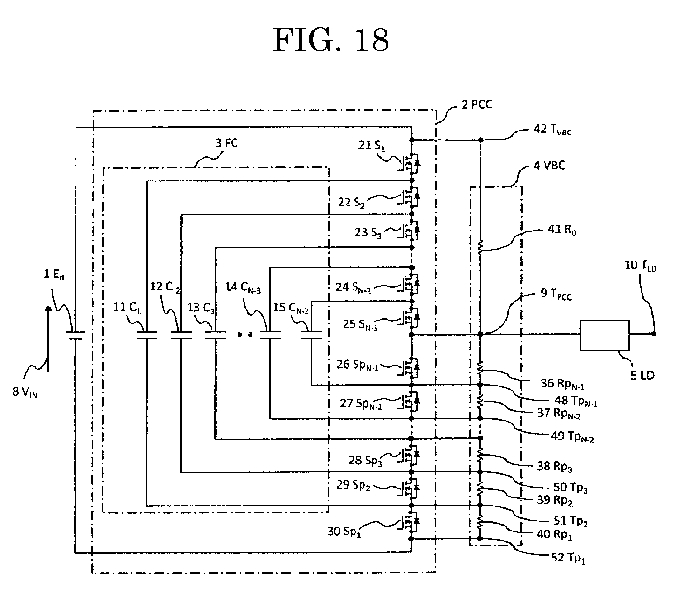

The circuit configurations of the voltage adjusting circuit 4 of Fig. 3 to Fig. 17, and Fig. 24 may be combined within the scope of the spirit of the present invention. For example, Fig. 18 shows a circuit configuration obtained by combining the voltage adjusting circuits 4 of Fig. 8 and Fig. 15.

In Fig. 3 to Fig. 18, and Fig. 24, the input power supply 1 is illustrated as a direct-current power supply. However, it may be replaced with a capacitor.

In Fig. 3 to Fig. 18, and Fig. 24, a gate control circuit is omitted for simplicity. However, a gate control circuit is provided for each of the main semiconductor switches 21 to 30.

In Fig. 3 to Fig. 18, and Fig. 24, each of the main semiconductor switches 21 to 30 is represented by an N-channel normally off-type MOSFET and a diode. However, the present invention is not limited to this, and the main semiconductor switches 21 to 30 may be any semiconductor switches as long as they have reverse conductivity.

Further, in order to improve the reverse conductivity, it is desirable that the main semiconductor switches 21 to 30 each be composed of a transistor and a reversely connected diode, as shown in Fig. 3 to Fig. 18, and Fig. 24. However, because the transistor itself has reverse conductivity, the main semiconductor switches can operate without a diode. Furthermore, the transistor may be a P-channel type or normally on-type MOSFET.

In the case of P-channel-type transistor, note that it is necessary to connect the anode of a diode to be connected to the transistor to the drain of the transistor, and the cathode of the diode to the source of the transistor. Furthermore, the transistor may be replaced with other semiconductor transistors than MOSFET, such as MISFET (insulated gate field effect transistor), HFET (hetero-junction field effect transistor), JFET (junction-type field effect transistor), BT (bipolar transistor), and IGBT (insulated gate type bipolar transistor). Further, the main semiconductor switches 21 to 30 constituting the main circuit may be a combination of two or more kinds of the semiconductor transistors mentioned above. In Fig. 3 to Fig. 18, and Fig. 24, the main semiconductor switches 21 to 30 are illustrated such that the main semiconductor switches of the same kind are connected in series all in the same direction. However, for example, when the main circuit is constructed using both of N-channel-type transistors and P-channel-type transistors, the P-channel-type transistors should be connected to have a drain and source in the reverse direction. The material of the transistor may be various semiconductors such as GaAs, SiC, and GaN, other than Si. Specific examples include GaAs-HFET, SiC-MOSFET, SiC-JFET, SiC-SIT, GaN-MOSFET, and GaN-HFET. However, variations in the characteristics of the main semiconductor switches constitute a factor of the voltages of the flying capacitors fluctuating from the prescribed values. Therefore, it is desirable to use semiconductor switches having the same characteristics as each other for a main semiconductor switch $S_n$ (n being an integer) in Fig. 3 to Fig. 18 and its paired $Sp_n$ (n in $S_n$ and $Sp_n$ being the same integer). It is further desirable to use semiconductor switches having the same characteristics for all of the main semiconductor switches 21 to 30.

The diode to constitute the main semiconductor switches 21 to 30 may be, other than various diodes made of Si, a Schottky barrier diode and a PiN diode made of SiC or GaN, which makes it possible to suppress switching loss significantly.

In the present embodiment, a DC-DC power conversion circuit and a DC-AC power conversion circuit have been described. However, it is also possible to obtain the effect of adjusting the voltages of the flying capacitors to the prescribed values automatically in an AC-DC power conversion circuit obtained by exchanging the input and output of Fig. 3 to Fig. 18 (i.e., of which input is alternating-current, and of which output is direct-current). Specifically, the input power supply 1 of Fig. 3 to Fig. 18, and Fig. 24 may be replaced with a load, and the load 5 may be replaced with an alternating-current power supply, which makes it possible to apply the present invention to an AC-DC power conversion circuit. Furthermore, an AC-DC-DC-AC obtained by combining an AC-DC power conversion circuit of the present invention or of any other kinds with a DC-AC power conversion circuit of the present invention constitutes an AC-AC power conversion circuit to which the present invention can be applied.

In Fig. 3 to Fig. 18, and Fig. 24, a DC-DC power conversion device and a DC-AC power conversion device have been explained. However, the present invention is particularly effective with a DC-AC power conversion device, and the most effective with a DC-AC power conversion device in which a load has an induction property.

It is possible to form the power conversion circuit of the present invention by integrating individual discrete elements on a printed circuit board, within a module, within a resin package, etc. Further, in such a case as in Fig. 14 to Fig. 17 in which the adjusting resistors 31 to 40 are inserted in parallel with the main semiconductor switches 21 to 30, it is desirable that the main semiconductor switches and the adjusting resistors connected in parallel with them be mounted within the same package. This enables voltage adjustment at a high speed. Further, ultimately, it is the most desirable to integrate and form the circuit on one-chip on a semiconductor or insulating substrate.

In terms of the circuit range to be formed on one-chip, the main semiconductor switches 21 to 25 and the main semiconductor switches 26 to 30 may be formed on one-chip, respectively. It is desirable to form all of the main semiconductor switches 21 to 30 on one-chip. It is more desirable to form all of the main semiconductor switches 21 to 30 and all of the flying capacitors 11 to 15 on one-chip. It is also desirable to form the adjusting resistor on one-chip together with the main semiconductor switches, which enables voltage adjustment at a higher speed. With one-chip formation, they are formed on a substrate integrally and behave as one component as a whole, which makes it possible to reduce the number of parts significantly, and improve the reliability considerably. Furthermore, mass production is available with a semiconductor process, which leads to reduction of the production cost. Desirable materials for one-chip formation are Si, GaAs, and GaN.

However, with a one-chip circuit, it is impossible to replace an individual element when the voltage of a flying capacitor departs from a prescribed value and an element in the circuit is destroyed as a result. Therefore, flying capacitors according to a conventional art require replacement of the entire circuit formed on one-chip, which rejects practical use. The automatic voltage adjusting function of the present invention can prevent such element destruction and improve the reliability of the one-chip multi-level power conversion circuit significantly.

Example 1

The effect of the present invention in the circuit configuration of Fig. 6 was verified based on a virtual experiment by simulation. A circuit used was a flying capacitor circuit-type multilevel power conversion circuit in a five-level DC-AC power conversion device. A circuit configuration of Fig. 1 was used as a circuit configuration of a conventional art. A circuit configuration of Fig. 6 was used as a circuit configuration of the present invention. Because the device was five-level, N was 5, three flying capacitors were involved, namely $C_1$, $C_2$, and $C_3$, and eight main semiconductor switches were involved, namely $S_1$, $S_2$, $S_3$, $S_4$, $Sp_1$, $Sp_2$, $Sp_3$, and $Sp_4$.

As calculation conditions, an input voltage was 200 V, the capacitance of the flying capacitors was 10 μF, a load was a serial circuit of a resistor having a resistance value of 30 Ω and an inductor having an inductance of 80 mH, the frequency of the fundamental wave of an output was 50 Hz, a carrier frequency was 2 kHz (a switching cycle was 1 ms), a modulation factor was 1.0, and the resistance value of an adjusting resistor was 5 kΩ. Note that no adjusting resistor was provided in the circuit of the conventional art. In this virtual experiment by simulation, the main semiconductor switch $S_3$ was switched at a switching delay of 1 μs, in order to simulate main semiconductor switches having variations in the characteristics.

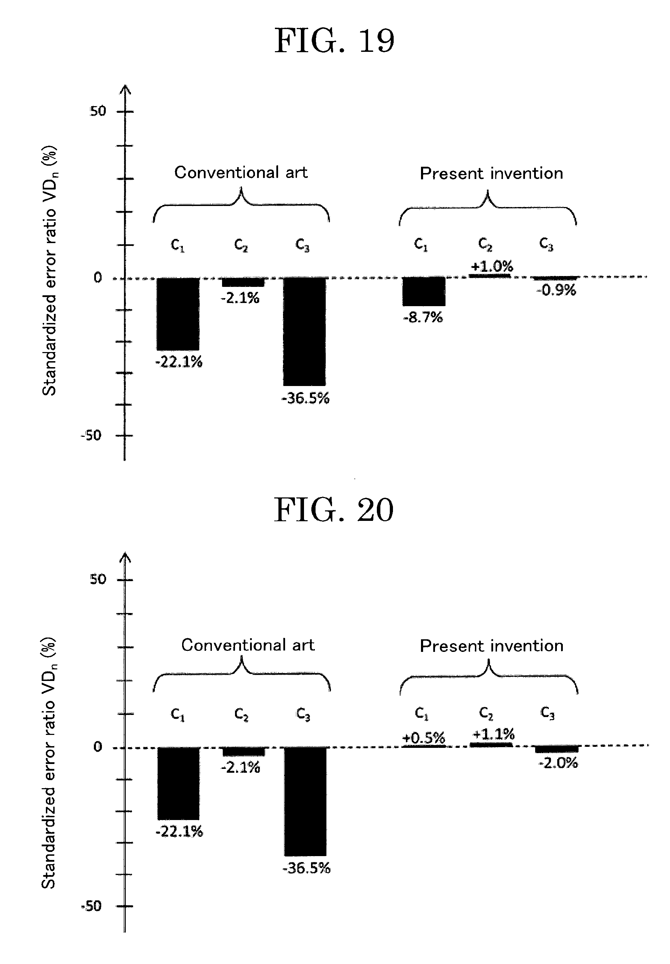

The waveforms of the voltages of $C_1$, $C_2$, and $C_3$ were integrated in the time domain, and the resultants were divided by the length of time of the integration, to thereby obtain average voltages $V_1$, $V_2$, and $V_3$. Error voltage ratios $VD_n$ obtained by standardizing $V_1$, $V_2$, and $V_3$ by the prescribed values $V_n$ represented by the formula (2) above according to the formula (3) below are shown in Fig. 19.

$$VD_n = (V_n - VD_n)/VD_n \qquad (3)$$

N is an integer of 3 or greater representing the number of levels, and n is an integer of 1 to N-2.

In the conventional art, the standardized error ratios of $C_1$, $C_2$, and $C_3$ were -22.1%, -2.1%, and -36.5%, respectively. On the other hand, in the present invention, they were -8.7%, +1.0%, and -0.9% respectively, and turned out to be closer to the prescribed values.

Another simulation was performed by inserting an adjusting resistor in parallel with a load as shown in Fig. 6 of the present invention, in a diode clamping circuit, which was a different circuit type of a multilevel power conversion circuit. As a result, there was no effective adjustment of the voltage values of the capacitors for synthesizing an output observed at all in the diode clamping circuit, even though an adjusting resistor was inserted in parallel with the load. It was revealed that the effect of the present invention could be obtained as a phenomenon characteristic to a flying capacitor circuit-type multilevel power conversion circuit.

Example 2

The effect of the present invention in the circuit configuration of Fig. 17 was verified based on a virtual experiment by simulation. A circuit used was a flying capacitor circuit-type multilevel power conversion circuit in a five-level DC-AC power conversion device. A circuit configuration of Fig. 1 was used as a circuit configuration of a conventional art. A circuit configuration of Fig. 17 was used as a circuit configuration of the present invention. Because the device was five-level, N was 5, three flying capacitors were involved, namely $C_1$, $C_2$, and $C_3$, and eight main semiconductor switches were involved, namely $S_1$, $S_2$, $S_3$, $S_4$, $Sp_1$, $Sp_2$, $Sp_3$, and $Sp_4$.

As calculation conditions, an input voltage was 200 V, the capacitance of the flying capacitors was 10 μF, a load was a serial circuit of a resistor having a resistance value of 30 Ω and an inductor having an inductance of 80 mH, the frequency of the fundamental wave of an output was 50 Hz, a carrier frequency was 2 kHz (a switching cycle was 1 ms), a modulation factor was 1.0, and the resistance values of adjusting resistors connected in parallel with the respective main semiconductor switches were 5 kΩ each, as in Example 1. Note that no adjusting resistor was provided in the circuit of the conventional art. In this virtual experiment by simulation, the main semiconductor switch $S_3$ was switched at a switching delay of 1 μs, in order to simulate main semiconductor switches having variations in the characteristics.

The waveforms of the voltages of $C_1$, $C_2$, and $C_3$ were integrated in the time domain, and the resultants were divided by the length of time of the integration, to thereby obtain average voltages $V_1$, $V_2$, and $V_3$. Error voltage ratios $VD_n$ obtained by standardizing $V_1$, $V_2$, and $V_3$ by the prescribed values $V_n$ represented by the formula (2) above according to the formula (4) below are shown in Fig. 20.

$$VD_n = (V_n - VD_n)/VD_n \qquad (4)$$

N is an integer of 3 or greater representing the number of levels, and n is an integer of 1 to N-2.

In the conventional art, the standardized error ratios of $C_1$, $C_2$, and $C_3$ were -22.1%, -2.1%, and -36.5%, respectively. On the other hand, in the present invention, they were +0.5%, +1.1%, and -2.0% respectively, and turned out to be yet closer to the prescribed values.

As can be seen from comparison between Fig. 19 and Fig. 20, it was revealed that the results of the circuit configuration of Fig. 17 in <Example 2> were closer to the prescribed values than the results of the circuit configuration of Fig. 6 in <Example 1>. This was estimated to be because there was only one adjusting resistor in the circuit of Fig. 6, whereas there were the same number of adjusting resistors as the number of main semiconductor switches in the circuit configuration of Fig. 17, which entailed many paths through which adjusting currents could flow, which made the present invention more effective.

Example 3

A prototype of a DC-AC power conversion device was produced, and the effect of the present invention with this device was verified by an experiment. A circuit used was a three-level flying capacitor circuit-type multilevel power conversion circuit. A circuit configuration of Fig. 1 was used as a circuit configuration of a conventional art. A circuit configuration of Fig. 17 was used as a circuit configuration of the present invention. Because the device was three-level, N was 3, only one flying capacitor was involved, namely $C_1$, and four main semiconductor switches were involved, namely $S_1$, $S_2$, $Sp_1$, and $Sp_2$.

As calculation conditions, an input voltage was 100 V, the capacitance of the flying capacitor was 8.2 $\mu$F, a load was a serial circuit of a resistor having a resistance value of 10 $\Omega$ and an inductor having an inductance of 40 mH, the frequency of the fundamental wave of an output was 50 Hz, and a carrier frequency was 2 kHz. All of the main semiconductor switches were commercially available Si-MOSFETs of the same model number. The withstand voltage and On-resistance of the Si-MOSFETs are 600 V, and 0.19 $\Omega$, respectively. The resistance values of adjusting resistors connected in parallel with the respective main semiconductor switches were either 5 k$\Omega$ or 1 k$\Omega$. For the sake of comparison, a power conversion device according to a conventional art in which no adjusting resistor was provided was also produced. The circuit configuration of the power conversion device of the conventional art was completely the same as that of the power conversion device of the present invention described above, except that no adjusting resistor was provided.

The waveform of the voltage of $C_1$ was integrated in the time domain, and the resultant was divided by the length of time of the integration, to thereby obtain an average voltage $V_1$. An error voltage ratio $VD_n$ obtained by standardizing $V_1$ by the prescribed value $V_n$ represented by the formula (1) above according to the formula (2) below are shown in Fig. 21.

$$VD_n = (V_n - VD_n)/VD_n \qquad (5)$$

N is an integer of 3 or greater representing the number of levels, and n is an integer of 1 to N-2.

In the conventional art, the standardized error ratio of $C_1$ was -54%. On the other hand, in the present invention, it was -26% and -2.0% at the voltage adjusting resistances of 5 k$\Omega$ and 1 k$\Omega$, respectively. It was revealed that the flying capacitor voltages obtained by the present invention were closer to the prescribed value. It was also revealed that a lower resistance value of an adjusting resistor would result in a flying capacitor voltage closer to the prescribed value, i.e., in a higher adjusting capability.

Meanwhile, the ratio of loss attributed to the voltage adjusting circuit to the power that was input to the power conversion device was 0.22% and 1.08% at the voltage adjusting resistances of 5 k$\Omega$ and 1 k$\Omega$, respectively. A trade-off relationship was observed that as the resistance value of an adjusting resistor was lowered, the adjusting capability improved but the adjusting electricity increased. That said, even the adjusting electricity at the adjusting resistance of 1 k$\Omega$ was only 1.08%, and the conversion efficiency of the power conversion device on the whole was 90% or higher, which was high. It was revealed that the present invention could provide a voltage adjusting circuit having a loss that was low enough for practical use.

Industrial Applicability

The present invention can be applied to a motor drive device, a power supply device for photovoltaic generation and aerogeneration, a power supply device for an uninterruptible power system (UPS), a power supply device for an electronic device, etc.

Reference Signs List

| | | |
|---|---|---|
| 1 $E_d$: | input direct-current power supply |
| 2 PPC: | main circuit |
| 3 FC: | flying capacitor circuit |
| 4 VBC: | voltage adjusting circuit |
| 5 LD: | load |
| 6 $I_{LD}$: | path of a load current |
| 7 $I_{VBC}$: | path of an adjusting current |
| 8 $V_{IN}$: | input voltage |
| 9 $T_{PCC}$: | output terminal of a main circuit |
| 10 $T_{LD}$: | output terminal of a load |
| 11 to 15 $C_1$ to $C_{N-2}$: | flying capacitor |
| 21 to 25 $S_1$ to $S_{N-1}$: | main semiconductor switch |
| 26 to 30 $Sp_1$ to $Sp_{N-1}$: | main semiconductor switch |
| 31 to 35 $R_1$ to $R_{N-1}$: | adjusting resistor |
| 36 to 40 $Rp_1$ to $Rp_{N-1}$: | adjusting resistor |
| 41, 41a, 41b, Ro, $R_{01}$, $R_{02}$: | adjusting resistor |
| 42, 42a, 42b, $T_{VBC}$, $T_{VBC1}$, $T_{VBC2}$: | output terminal of an adjusting circuit |
| 43 to 47 $T_1$ to $T_{N-1}$: | output terminal of an adjusting circuit |
| 48 to 52 $Tp_1$ to $Tp_{N-1}$: | output terminal of an adjusting circuit |
| 53 SW: | adjusting switch |
| 54 $R_{FET}$: | adjusting bidirectional switch |
| 55 Cp: | adjusting capacitor |
| 56 $C_s$: | adjusting capacitor |
| 57 $V_{in}/2$: | half of an input voltage |
| 58 $V_1$: | voltage of a flying capacitor $C_1$ |
| 59 $V_2$: | voltage of a flying capacitor $C_2$ |
| 60 $V_3$: | voltage of a flying capacitor $C_3$ |

**Claims**

1.  A flying capacitor circuit-type multilevel power conversion circuit, comprising:

    one or more flying capacitors;
    four or more main semiconductor switches; and
    an input terminal and an output terminal of a main circuit,
    wherein the one or more flying capacitors are connected sequentially between:

    a node between adjoining ones of the main semiconductor switches included in a first serial switch line formed by two or more of the main semiconductor switches being connected in series with one side of the input terminal; and
    a node between adjoining ones of the main semiconductor switches included in a second serial switch line formed by a same number of the main semiconductor switches being connected in series with the other side of the input terminal,
    wherein the output terminal of the main circuit is a node to which open terminals of the first serial switch element line and second serial switch element line are connected,
    wherein the main circuit is further provided with a closed circuit composed of a resistor, and
    wherein in all charging and discharging operation modes in which an output current flows through the one or more flying capacitors, the multilevel power conversion circuit has a function of adjusting voltages of the one or more flying capacitors to prescribed values automatically without detecting voltage values of the one or more flying capacitors, by letting a charging current and a discharging current of the one or more flying capacitors flow through the resistor of the closed circuit.

2.  The multilevel power conversion circuit according to claim 1,

wherein all of the main semiconductor switches included in the first serial switch line, or all of the main semiconductor switches included in the second serial switch line, or both thereof are produced on one substrate made of a semiconductor or an insulating material.

3. The multilevel power conversion circuit according to claim 1 or 2,
wherein the resistor is connected between the output terminal of the main circuit and an output terminal of a load connected to the output terminal of the main circuit.

4. The multilevel power conversion circuit according to claim 1 or 2,
wherein the resistor is connected to the output terminal of the main circuit, and to either side of the input terminal.

5. The multilevel power conversion circuit according to claim 1 or 2,
wherein the resistor is connected to the output terminal of the main circuit, and to any middle point between a plurality of input power supplies connected in series with the input terminal of the main circuit.

6. The multilevel power conversion circuit according to claim 1 or 2,
wherein the resistor is composed of two or more resistors connected in series, and
wherein nodes between adjoining ones of the resistors are connected to the nodes between adjoining ones of the main semiconductor switches.

7. The multilevel power conversion circuit according to claim 1 or 2,
wherein the resistor is connected in parallel with all of the main semiconductor switches of the first serial switch line or the second serial switch line.

8. The multilevel power conversion circuit according to claim 1 or 2,
wherein the resistor is connected in parallel with all of the main semiconductor switches of the first serial switch line and the second serial switch line.

9. The multilevel power conversion circuit according to any one of claims 6 to 8, wherein all of the resistors have a same resistance value.

10. The multilevel power conversion circuit according to any one of claims 1 to 9, further comprising in the closed circuit:

a semiconductor switch connected in series with the resistor.

11. The multilevel power conversion circuit according to any one of claims 1 to 9, further comprising in the closed circuit:

a capacitor connected in series with the resistor.

12. The multilevel power conversion circuit according to any one of claims 1 to 11, further comprising in the closed circuit:

a capacitor connected in parallel with the resistor.

13. The multilevel power conversion circuit according to any one of claims 1 to 12,
wherein the resistor is a semiconductor transistor, and a gate terminal and a drain terminal of the semiconductor transistor are short-circuited.

14. The multilevel power conversion circuit according to any one of claims 1 to 13,
wherein the resistor is a semiconductor bidirectional switch.

15. An AC-DC power conversion circuit,
wherein the AC-DC power conversion circuit is constructed by replacing the load and the input power supply of the multilevel power conversion circuit according to any one of claims 1 to 14 with an alternating-current input power supply and a load, respectively.

16. A multilevel power conversion device, comprising:

the multilevel power conversion circuit according to any one of claims 1 to 14.

**17.** An AC-DC power conversion device, comprising:

the AC-DC power conversion circuit according to claim 15.

# FIG. 1

# FIG. 2

# FIG. 3

# FIG. 4

# FIG. 5

# FIG. 6

# FIG. 7

# FIG. 8

EP 2 897 277 A1

# FIG. 9

# FIG. 10

EP 2 897 277 A1

FIG. 11

27

# FIG. 12

# FIG. 13

# FIG. 14

# FIG. 15

# FIG. 16

# FIG. 17

# FIG. 18

# FIG. 19

# FIG. 20

# FIG. 21

# FIG. 22

| State \ Switch | $S_1$ | $S_2$ | $Sp_1$ | $Sp_2$ |
|---|---|---|---|---|
| Charging | Conductive | Open | Open | Conductive |
| | Open | Conductive | Conductive | Open |
| Discharging | Conductive | Open | Open | Conductive |
| | Open | Conductive | Conductive | Open |

# FIG. 23

# FIG. 24

**INTERNATIONAL SEARCH REPORT**

| International application No. |
| --- |
| PCT/JP2013/074221 |

**A. CLASSIFICATION OF SUBJECT MATTER**
*H02M7/483(2007.01)i*

According to International Patent Classification (IPC) or to both national classification and IPC

**B. FIELDS SEARCHED**

Minimum documentation searched (classification system followed by classification symbols)
H02M7/483

Documentation searched other than minimum documentation to the extent that such documents are included in the fields searched
Jitsuyo Shinan Koho        1922–1996   Jitsuyo Shinan Toroku Koho   1996–2013
Kokai Jitsuyo Shinan Koho  1971–2013   Toroku Jitsuyo Shinan Koho   1994–2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2009-177951 A (National Institute of Advanced Industrial Science and Technology), 06 August 2009 (06.08.2009), paragraphs [0005] to [0007]; fig. 7 & US 2009/0195068 A1 | 1–17 |
| A | JP 2011-254565 A (Mitsubishi Electric Corp.), 15 December 2011 (15.12.2011), paragraphs [0010] to [0041]; fig. 1A to 1C (Family: none) | 1–17 |
| A | JP 2006-81362 A (Mitsubishi Electric Corp.), 23 March 2006 (23.03.2006), paragraphs [0008] to [0011]; fig. 1 to 2 (Family: none) | 1–17 |

| ☒ Further documents are listed in the continuation of Box C. | ☐ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 27 November, 2013 (27.11.13) | 10 December, 2013 (10.12.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/074221

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2012/020733 A1  (Yazaki Corp.),<br>16 February 2012 (16.02.2012),<br>paragraphs [0024] to [0053]; fig. 1<br>& JP 2012-58227 A        & US 2013/0147491 A1<br>& EP 2605026 A1          & CN 103069286 A | 1-17 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MOSTAFA KHAZRAEI ; HOSSEIN SEPAHVAND ; KEITH A. CORZINE ; MEHDIFERDOWSI.** Active Capacitor Voltage Balancing in Single-Phase Flying-Capacitor Multilevel Power Converters. *IEEE TRANSACTIONS ON INDUSTRIAL ELECTRONICS,* February 2002, vol. 59 (2